# EUROPÄISCHE PATENTSCHRIFT

(11) **EP 0 895 263 B1**
(45) Veröffentlichungstag und Bekanntmachung des Hinweises auf die Patenterteilung: **07.09.2005**
(21) Anmeldenummer: 98113473.7
(22) Anmeldetag: 20.07.1998
(51) Int. Cl.: H01H 47/00

(54) **Anordnung zum exklusiven Einschalten elektrischer Verbraucher**
Arrangement for switching on electric loads one at a time
Agencement pour la mise en circuit de dispositifs électriques un à la fois

(30) Priorität: 02.08.1997 DE 19733447
(43) Veröffentlichungstag der Anmeldung: 03.02.1999
(73) Patentinhaber: Delphi Technologies Inc., Troy, MI 48007 (US)
(72) Erfinder: Köhler, Joachim, 55546 Biebelsheim (DE)
(74) Vertreter: Becker, Bernd

(56) Entgegenhaltungen:
- DE-A- 2 057 296
- DE-A- 3 026 619

## Beschreibung

Die Erfindung betrifft eine Anordnung zum exklusiven Einschalten eines auswählbaren Exemplars aus einer Mehrzahl n von Verbrauchern, deren jeder über einen individuellen Betätigungsschalter zwischen die Pole einer Betriebsspannungsquelle schaltbar ist.

Anordnungen dieser Gattung werden benötigt, wenn aus verschiedenen Gründen verhindert werden soll, daß verschiedene elektrische Verbraucher gleichzeitig in Betrieb gesetzt werden, sei es unbeabsichtigt oder gewollt. In vielen Fällen kann eine gleichzeitige Einschaltung von mehr als einem Verbraucher zu unerwünschten Erscheinungen führen, etwa wenn hierdurch eine gemeinsame Stromversorgungsquelle überlastet wird oder wenn sich gleichzeitig eingeschaltete Verbraucher in ihrem Betrieb oder in ihrer Wirkungsweise gegenseitig stören. So enthalten beispielsweise Vorrichtungen, die zum räumlichen Verstellen von Gegenständen in mehreren Dimensionen dienen, häufig eine entsprechende Mehrzahl elektrischer Antriebe, deren gleichzeitige Betätigung vom Verstellmechanismus nicht verkraftet werden könnte oder dem Benutzer die Kontrolle erschweren würde oder die Stromversorgungsquelle über das gewünschte Maß hinaus belasten würde. Dies betrifft unter anderem auch diverse Vorrichtungen in der Ausstattung von Kraftfahrzeugen, etwa Vorrichtungen zur Sitzverstellung oder zur Lenksäulenverstellung.

Bekannt sind verschiedene Anordnungen zur gegenseitigen Verriegelung einer beliebigen Anzahl von Schalteinrichtungen derart, daß immer nur eine der Schalteinrichtungen schaltbar ist, vgl. z.B. DE-PS 1 040 111, DE-AS 20 08 460 und 20 57 296 sowie DE 30 26 619 C2. In den dort beschriebenen Fällen sind die Schalteinrichtungen jeweils elektromechanische Relais, deren jedes neben dem die eigentliche Schaltstrecke bildenden Hauptkontakt noch weitere Kontakte enthalten muß, etwa für die Selbsthaltung des Relais und/oder zum Schließen und Öffnen zusätzlicher Hilfsschaltstrecken, die beim Ansprechen des Relais die Erregerstromkreise der jeweils anderen Relais unterbrechen. Bei einer in der DE-AS 1 640 995 beschriebenen Ausführungsform wird die gleichzeitige Betätigung mehrerer Relais dadurch verhindert, daß einer gemeinsamen Erregerstrom-Versorgungsschiene der Relais ein Widerstand vorgeschaltet ist, an welchem bei gleichzeitiger Betätigung von zwei oder mehr Exemplaren der Betätigungsschalter ein so großer Spannungsabfall auftritt, daß die zwischen den Schienen verbleibende Restspannung nicht mehr ausreicht, um eine Relaisspule anziehen zu lassen. Diese Ausführungsform kann zwar ohne zusätzliche Relaiskontakte auskommen, sie ist jedoch zwangsläufig empfindlich gegenüber Schwankungen der Versorgungsspannung und erfordert zudem eine sehr genaue Dimensionierung der elektrischen Bauteile. Ein weiterer Nachteil aller vorstehend angesprochenen bekannten Anordnungen ist, daß eine Betätigung der Schalteinrichtungen nur über Tastschalter möglich ist.

Aufgabe der vorliegenden Erfindung ist die Schaffung einer Anordnung der eingangs beschriebenen Gattung, die mit relativ einfachen und kompakten Bauelementen auskommen kann und keine hohen Toleranzanforderungen an die verwendeten Bauteile stellt.

Diese Aufgabe wird erfindungsgemäß bei einer Anordnung mit den Merkmalen des Anspruchs 1 gelöst. Vorteilhafte Ausgestaltungen der Erfindung sind in Unteransprüchen gekennzeichnet.

Gemäß der Erfindung ist allen Verbrauchern, oder allen außer einem Verbraucher, jeweils ein individueller, elektrisch steuerbarer Schutzschalter zugeordnet, der einen Steuereingang und eine im Speisestromkreis des betreffenden Verbrauchers liegende Schaltstrecke hat, die normalerweise leitend ist und nur unterbrochen ist, wenn am Steuereingang ein Aktivierungssignal anliegt. Des weiteren ist gemäß der Erfindung jedem Verbraucher eine individuelle elektrische Fühleinrichtung zugeordnet, die beim Anliegen von Betriebsspannung am betreffenden Verbraucher ein Aktivierungssignal an ihrem Ausgang liefert, das den Steuereingängen der den anderen Verbrauchern zugeordneten Schutzschalter zugeführt ist.

Die Erfindung unterscheidet sich von dem oben beschriebenen Stand der Technik prinzipiell dadurch, daß nach Einschaltung eines Verbrauchers die Sperrung der anderen Verbraucher durch zusätzliche Auftrennung der betreffenden Verbraucherstromkreise erfolgt und nicht, wie in den bekannten Fällen, durch Verhinderung des Ansprechens der zugeordneten Betätigungsschalter. Da also bei der erfindungsgemäßen Anordnung nicht verriegelnd auf die Betätigungsschalter selbst eingewirkt zu werden braucht, läßt sich jede erdenkliche Art von Betätigungsschaltern verwenden, die zudem von Verbraucher zu Verbraucher unterschiedlich sein können, ohne daß es einer gesonderten Anpassung der übrigen Bauteile bedarf. Dies ist auch von besonderem Vorteil bei nachträglichem Einbau der Anordnung in ein bereits bestehendes Verbrauchersteuersystem, selbst mit bereits installierten Betätigungsschaltern.

Die Erfindung wird nachstehend an Ausführungsbeispielen anhand von Zeichnungen näher erläutert.
- Fig. 1: ist das elektrische Schaltbild einer erfindungsgemäßen Anordnung zum selektiven und exklusiven Einschalten jeweils eines von drei umkehrbaren Elektromotoren mit Gleichberechtigung; und
- Fig. 2: zeigt die Anordnung nach Fig. 1 in einer Abwandlung zur Bevorrechtigung eines der Elektromotoren.

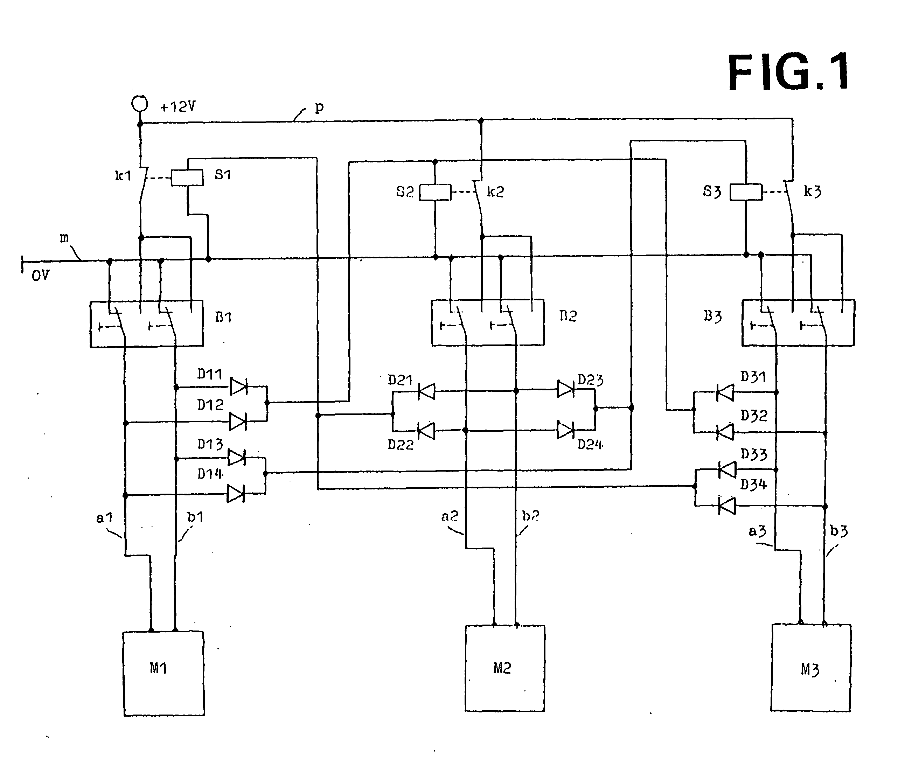

Gemäß der Fig. 1 sind die Klemmen dreier umkehrbarer Gleichstrom-Elektromotoren M1, M2 und M3 über jeweils eine Zuleitung a1, b1 bzw. a2, b2 bzw. a3, b3 und einen zugeordneten Betätigungsschalter B1 bzw. B2 bzw. B3 mit zwei Potentialschienen m und p verbindbar, deren erste an ein Massepotential (0 Volt) und deren zweite an ein Betriebspotential (+12 Volt) angeschlossen ist, welches von einer (nicht dargestellten) Betriebsspannungsquelle wie z.B einer Akkumulatorbatterie geliefert wird. Jeder der Wechselschalter B1, B2, B3 ist symbolisch als Kombination zweier einpoliger Umschalter dargestellt, wobei die beweglichen Kontakte oder "Arme" jedes Umschalterpaars an das Klemmenzuleiterpaar des zugeordneten Elektromotors angeschlossen sind, während der eine feste Kontakt jedes Umschalterpaars an die Masseschiene m angeschlossen ist und der andere feste Kontakt jedes Umschalterpaars über einen Relais-Ruhekontakt k1 bzw. k2 bzw. k3 mit der Betriebspotentialschiene p verbunden ist.

Insgesamt sind also drei solche Relais-Ruhekontakte k1, k2 und k3 vorhanden, deren jeder jeweils einem der Betätigungsschalter B1, B2, B3 und damit jeweils einem der Elektromotoren M1, M2, M3 zugeordnet ist und beim Öffnen den Stromversorgungskreis für den betreffenden Motor unterbricht, egal in welchem Schaltzustand sich der betreffende Betätigungsschalter befindet.

Jeder Betätigungsschalter B1, B2, B3 kann von Hand betätigt werden, um verschiedene Schaltzustände einzunehmen, in denen der angeschlossene Motor entweder ausgeschaltet ist, oder für den Lauf in einer ersten Drehrichtung oder für den Lauf in einer zweiten, entgegengesetzten Drehrichtung eingeschaltet ist. Stehen beispielsweise beim Betätigungsschalter B1 beide Schaltarme in der gezeigten linken Position, dann erhalten beide Leitungen a1 und b1 und somit beide Klemmen des Elektromotors M1 Massepotential von der Masseschiene m, so daß der besagte Motor ausgeschaltet ist. Befindet sich in einem zweiten Schaltzustand des Betätigungsschalters B1 der linke Arm in der rechten Stellung und der rechte Arm in der gezeigten linken Stellung, dann empfängt die linke Klemme des Motors M1 über die Leitung a1 Betriebspotential von der Schiene p (bei geschlossenem Relaiskontakt k1), während die andere Motorklemme über die Leitung b1 Massepotential von der Schiene m empfängt, so daß ich der Motor in einer ersten Richtung dreht, beispielsweise rechtssinnig. Steht in einem dritten Zustand des Betätigungsschalters B1 der linke Schaltarm in der gezeigten linken Position und der rechte Schaltarm in der rechten Position, dann empfängt die linke Motorklemme über die Leitung a1 Massepotential von der Schiene m, während die rechte Motorklemme über die Leitung b1 Betriebspotential von der Schiene p empfängt (bei geschlossenen Relaiskontakt k1), so daß der Motor für umgekehrte Drehrichtung, z.B. Rechtsdrehung, eingeschaltet ist.

In genau der gleichen Weise funktionieren die Betätigungsschalter B2 und B3 zur Steuerung der Motoren M2 und M3.

Um zu verhindern, daß in eingeschaltetem Zustand einer der Motoren ein weiterer Motor eingeschaltet werden kann, ist in der nachstehend zu beschreibenden Weise dafür gesorgt, daß nach Einschaltung eines der Motoren die im Stromversorgungskreis der anderen Motoren liegenden Relaiskontakte durch Erregung jeweils zugeordneter Relaisspulen geöffnet werden. Wie dargestellt, ist jedem Relaiskontakt k1, k2, k3 eine Relaisspule S1 bzw. S2 bzw. S3 zugeordnet. Jede Spule ist mit ihrem einen Ende an die Masseschiene m angeschlossen. Das andere Ende jeder Relaisspule ist über jeweils eine Diode mit jeder Klemmenzuleitung aller derjenigen Elektromotoren verbunden, deren Stromversorgung über die Ruhekontakte der jeweils anderen Relaisspulen läuft. Jede Diode ist so gepolt, daß sie beim Erscheinen des Betriebspotentials auf der mit ihr verbundenen Motorklemmen-Zuleitung durchlässig wird und somit Aktivierungspotential zum Erregen der mit ihr verbundenen Relaisspule liefert. Somit werden beim Einschalten eines der Motoren die den anderen Motoren zugeordneten Relaiskontakte geöffnet, so daß die Stromversorgung für diese anderen Motoren unterbrochen ist und auch durch Betätigung der zugeordneten Betätigungsschalter nicht eingeschaltet werden kann. Im einzelnen wird, wenn der Motor M1 durch den Betätigungsschalter B1 auf Linksdrehung geschaltet ist (linker Arm rechts, rechter Arm links), die Klemmenzuleitung a1 auf das (positive) Betriebspotential gesetzt, so daß positives Potential über die Diode D12 zur Relaisspule S2 und über die Diode D14 zur Relaisspule S3 gelangt. Die besagten Relaisspulen werden somit erregt, so daß die Kontakte k2 und k3 geöffnet werden und die zugeordneten Motoren M2 und M3 nicht mehr eingeschaltet werden können. In ähnlicher Weise wird, wenn der Motor M1 für Rechtsdrehung eingeschaltet ist (linker Arm links, rechter Arm rechts), die Klemmenzuleitung b1 auf das positive Betriebspotential gesetzt, so daß positives Potential über die Diode D11 zur Relaisspule S2 und über die Diode D13 zur Relaisspule S3 gelangt. Diese beiden Relaisspulen werden also auch hier erregt, so daß infolge des Öffnens der Relaiskontakte k2 und k3 die Motoren M2 und M3 nicht eingeschaltet werden können.

Die Relaisspulen S2 und S3 bilden also jeweils mit dem zugeordneten Ruhekontakt k2 bzw. k3 einen elektrisch steuerbaren Schutzschalter zum Verhindern des Einschaltens der zugeordneten Verbraucher. Die Dioden D11, D12, D13 und D14 bilden eine Fühlschaltung, die einen eingeschalteten Zustand des Motors M1 erkennt und daraufhin ein Aktivierungspotential zum Öffnen dieser Schutzschalter liefert.

In analoger Weise bildet auch die Relaisspule S1 gemeinsam mit ihrem Ruhekontakt k1 einen Schutzschalter, der dem Motor M1 zugeordnet ist. Ebenfalls in analoger Weise bilden die mit den Klemmenzuleitungen a2, b2 des Motors M2 verbundenen Dioden D21, D22, D23, D24 eine Fühlschaltung, die den eingeschalteten Zustand des Motors M2 erkennt und daraufhin ein Aktivierungspotential zur Erregung der Relaisspulen S1 und S3 liefert, so daß die Kontakte k1 und k3 geöffnet werden und die Stromversorgung zu den Motoren M1 und M3 unterbrochen wird. Entsprechendes gilt für die Dioden D31, D32, D33, D34, die eine Fühlschaltung bilden, welche den eingeschalteten Zustand des Motors M3 erkennt und daraufhin ein Aktivierungspotential zur Erregung der Relaisspulen S1 und S2 liefert, so daa die Schalter k1 und k2 geschlossen werden und der Stromversorgungsweg für die Motoren M1 und M2 unterbrochen wird.

Die in der Fig. 1 gezeigte Schaltungsanordnung garantiert also, daß beim Einschalten irgendeines der Motoren M1, M2, M3 die jeweils anderen Motoren nicht mehr eingeschaltet werden können, ohne daß hierbei einer der Motoren bevorrechtigt wäre.

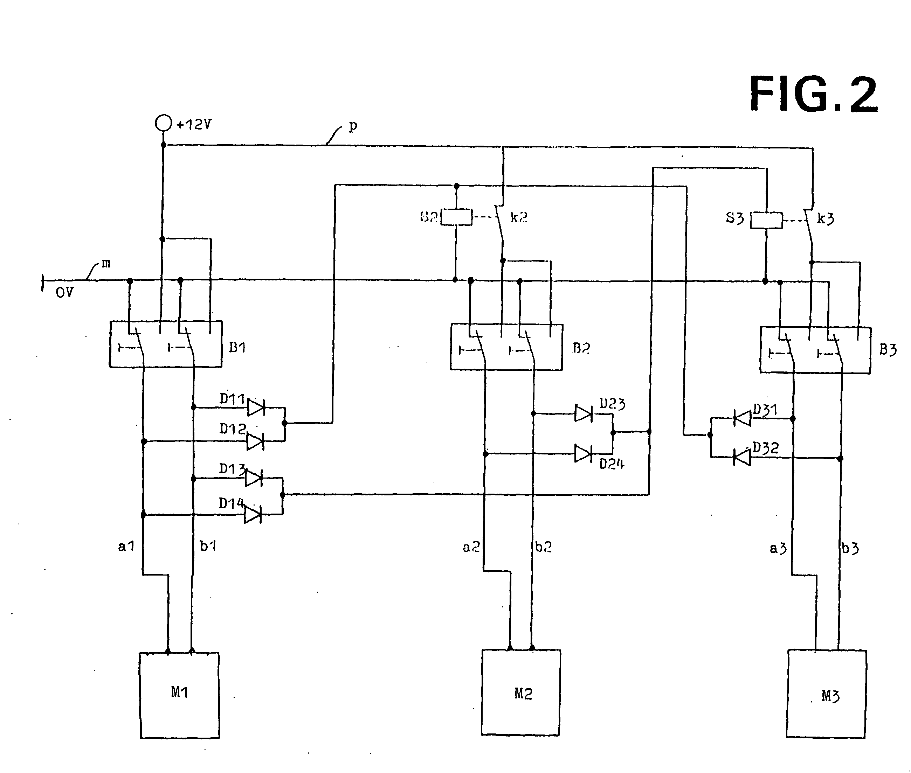

Eine Abwandlung der Anordnung mit Bevorrechtigung eines der Motoren ist in der Fig. 2 gezeigt. Die Anordnung nach Fig. 2 unterscheidet sich von der beschriebenen Anordnung nach Fig. 1 lediglich dadurch, daß der Schutzschalter S1, k1 im Stromversorgungsweg des Motors M1 fehlt und auch die entsprechenden Diodenverbindungen (D21, D22, D33, D34 in Fig. 1) fortfallen. Es ist leicht erkennbar, daß bei dieser Anordnung die Einschaltung des Motors M1 bevorrechtigt ist. Die Motoren M2 und M3 sind untereinander gleichberechtigt, wie im Falle der Fig. 1, d.h. nachdem einer von ihnen eingeschaltet ist, kann der andere nicht mehr eingeschaltet werden. Der Motor M1 hingegen läßt sich dennoch einschalten, was aber zur unmittelbaren Abschaltung beider anderer Motoren M2 und M3 führt.

Die vorstehend anhand der Figuren 1 und 2 beschriebenen Ausführungsformen sind nur als Beispiele für vorteilhafte Realisierungsmöglichkeiten der Erfindung anzusehen. Statt der beschriebenen drei Verbraucher in Form umkehrbarer Elektromotoren können auch nur zwei oder mehr als drei Verbraucher vorgesehen sein. Bei den Verbrauchern kann es sich auch um nichtumkehrbare Elektromotoren handeln, was den Schaltungsaufwand für die Fühleinrichtungen entsprechend vermindert, denn in diesem Falle wäre jede Fühleinrichtung zur Erfassung des elektrischen Zustandes nur einer der beiden Klemmenzuleitungen auszulegen. Auch ist die Art der Verbraucher nicht auf Elektromotoren beschränkt. Eine erfindungsgemäße Anordnung läßt sich überall dort anwenden, wo es gilt, in einer Gruppe beliebiger elektrischer Verbraucher einen gleichzeitigen Einschaltzustand von mehr als einem Verbraucher zu verhindern.

Schließlich ist auch die Ausgestaltung der Betätigungsschalter, der Schutzschalter und der Fühleinrichtungen nicht auf die anhand der Zeichnungen beschrieben Ausführungsformen beschränkt. Beispielsweise können die Schutzschalter auch durch Halbleiterbauelemente realisiert werden, und für die Fühleinrichtungen lassen sich statt der spannungsfühlenden Diodennetzwerke auch andere Einrichtungen verwenden, etwa stromfühlende Elemente mit ohmschen Widerständen oder optischen Kopplern oder induktiven oder kapazitiven Übertragern, letztere insbesondere im Falle von Wechselstromverbrauchern.

## Patentansprüche

1. Anordnung zum exklusiven Einschalten eines auswählbaren Exemplars aus einer Mehrzahl n von Verbrauchern, deren jeder über einen individuellen Betätigungsschalter zwischen die Pole einer Betriebsspannungsquelle schaltbar ist, **dadurch gekennzeichnet,**
- **daß** mindestens n-1 Exemplaren der Verbraucher (M1, M2, M3) jeweils ein individueller, elektrisch steuerbarer Schutzschalter zugeordnet ist, der einen Steuereingang und eine im Speisestromweg des betreffenden Verbrauchers liegende Schaltstrecke (k1, k2, k3) hat, die normalerweise leitend ist und nur unterbrochen ist, wenn am Steuereingang ein Aktivierungssignal anliegt, und
- **daß** jedem Verbraucher eine individuelle elektrische Fühleinrichtung (D11-D14, D21-D24, D31-D34) zugeordnet ist, die beim Anliegen von Betriebsspannung am betreffenden Verbraucher ein Aktivierungssignal an ihrem Ausgang liefert, das den Steuereingängen der den anderen Verbrauchern zugeordneten Schutzschalter zugeführt ist.

2. Anordnung nach Anspruch 1, **dadurch gekennzeichnet, daß** eine gemeinsame Betriebsspannungsquelle (0V/+12V) für alle Verbraucher (M1, M2, M3) vorgesehen ist.

3. Anordnung nach Anspruch 2, **dadurch gekennzeichnet, daß** die Betriebsspannungsquelle (0V/+12V) eine Gleichspannungsquelle ist und daß die Verbraucher (M1, M2, M3) Gleichstromverbraucher sind und daß die Fühleinrichtungen (D11-D14, D21-24, D31-D34) durch Dioden gebildet sind, indem zumindest eine Klemme jedes Verbrauchers, deren Potential sich beim Anlegen von Betriebsspannung ändert, mit den Steuereingängen der den anderen Verbrauchern zugeordneten Schutzschalter über jeweils eine die Potentialänderung übertragende Diode verbunden ist.

4. Anordnung nach Anspruch 1, **dadurch gekennzeichnet, daß** jeder Schutzschalter durch ein elektromagnetisches Relais gebildet ist, das einen im Zuleitungsweg des zugeordneten Verbrauchers (z.B. M2) liegenden Ruhekontakt (k2) hat und dessen Spule (S2) mit den Ausgängen der den anderen Verbrauchern zugeordneten Fühleinrichtungen (D11-D14, D31-D34) verbunden ist und durch das Aktivierungssignal erregt wird.

5. Anordnung nach den Ansprüchen 3 und 4, **dadurch gekennzeichnet,**
- **daß** das eine Ende der Relaisspule (z.B. S2) jedes Schutzschalters mit den Ausgangsseiten der Dioden aller den anderen Verbrauchern (z.B. M1, M3) zugeordneten Fühleinrichtungen (z.B. D11-D14, D31-D34) verbunden ist und
- **daß** das andere Ende der Relaisspule (z.B. S2) jedes Schutzschalters mit demjenigen Pol (0V) der Betriebs spannungsquelle verbunden ist, dessen Potential an ders ist als das von den Dioden Übertragene Potential.

6. Anordnung nach einem der vorhergehenden Ansprüche, **dadurch gekennzeichnet, daß** die Verbraucher (M1, M2, M3) Elektromotoren sind.

7. Anordnung nach einem der vorhergehenden Ansprüche, **dadurch gekennzeichnet, daß** die Elektromotoren (M1, M2, M3) Motoren mit umkehrbarer Drehrichtung sind und die Betätigungsschalter (B1, B2, B3) Wechselschalter sind.

8. Anordnung nach Anspruch 6 oder 7, **dadurch gekennzeichnet, daß** die Elektromotoren (M1, M2, M3) die Antriebe einer Einrichtung zur elektrischen Sitzverstellung, insbesondere in einem Kraftfahrzeug, sind.

9. Anordnung nach Anspruch 6 oder 7, **dadurch gekennzeichnet, daß** die Elektromotoren (M1, M2, M3) die Antriebe einer Einrichtung zur elektrischen Längsspulenverstellung in einem Kraftfahrzeug sind.

## Claims

1. Arrangement for the exclusive switching on of an item selectable from a plurality n of consuming devices each of which is connectable between the poles of an operating voltage source through an individual actuating switch, **characterised in that**
- at least n-1 items of the consuming devices (M1, M2, M3) have each assigned to them an individual, electrically controllable safety switch having a control input and a make-break contact (kl, k2, k3) located in the supply current path of the consuming device in question which contact is normally conducting and is only broken when an activation signal is applied to the control input, and
- that to each consuming device an individual electric sensor device (D11-D14, D21-D24, D31-34) is assigned which on application of operating voltage to the consuming device in question supplies at its output an activation signal which is fed to the control inputs of the safety switches assigned to the other consuming devices.

2. Arrangement according to claim 1, **characterised in that** a common operating voltage source (0V/+12V) for all consuming devices (M1, M2, M3) is provided.

3. Arrangement according to claim 2, **characterised in that** the operating voltage source (0V/+12V) is a direct current voltage source, that the consuming devices (M1, M2, M3) are direct current consuming devices and that the sensor devices (D11-D14, D21-D24, D31-34) are formed by diodes **in that** at least one terminal of each consuming device whose potential changes on application of operating voltage is connected to the control inputs of the safety switches assigned to the other consuming devices through a diode in each case conveying the change in potential.

4. Arrangement according to claim 1, **characterised in that** each safety switch is formed by an electromagnetic relay which has a break contact (k2) located in the lead path of the assigned consuming device (eg M2) and whose coil (S2) is connected to the outputs of the sensor devices (D11-D14, D31-D34) assigned to the other consuming devices and is excited by the activation signal.

5. Arrangement according to claims 3 and 4, **characterised in that**
- one end of the relay coil (eg S2) of each safety switch is connected to the output ends of the diodes of all sensor devices (eg D11-D14, D31-D34) assigned to the other consuming devices (eg M1, M3), and
- that the other end of the relay coil (eg S2) of each safety switch is connected to that pole (0V) of the operating voltage source whose potential differs from the potential conveyed by the diodes.

6. Arrangement according to one of the preceding claims, **characterised in that** the consuming devices (M1, M2, M3) are electric motors.

7. Arrangement according to one of the preceding claims, **characterised in that** the electric motors (M1, M2, M3) are motors having a reversible direction of rotation and the actuating switches (B1, B2, B3) are changeover switches.

8. Arrangement according to claim 6 or 7, **characterised in that** the electric motors (M1, M2, M3) are the drives of a device for electric seat adjustment, in particular in a motor vehicle.

9. Arrangement according to claim 6 or 7, **characterised in that** the electric motors (M1, M2, M3) are the drives of a device for electric longitudinal coil adjustment in a motor vehicle.

## Revendications

1. Agencement pour la mise en circuit exclusive d'un exemplaire sélectionnable parmi une pluralité n de dispositifs de consommation d'énergie dont chacun est commutable entre les pôles d'une source de tension d'alimentation par l'intermédiaire d'un commutateur d'actionnement individuel, **caractérisé en ce**
- **qu'**à chacun d'au moins n-1 exemplaires des dispositifs de consommation d'énergie (M1, M2, M3) est associé un commutateur de protection individuel pouvant être commandé électriquement qui a une entrée de commande et un élément de commutation (kl, k2, k3) qui est situé sur le chemin de courant d'alimentation du dispositif de consommation d'énergie concerné et qui est normalement conducteur et n'est interrompu que lorsqu'un signal d'activation est appliqué à l'entrée de commande, et
- **en ce qu**'à chaque dispositif de consommation d'énergie est associé un dispositif sensible électrique individuel (D11-14, D21-D24, D31-D34) qui, lors de l'application de tension d'alimentation au dispositif de consommation d'énergie concerné fournit, à sa sortie, un signal d'activation qui est conduit aux entrées de commande des commutateurs de protection associés aux autres dispositifs de consommation d'énergie.

2. Agencement selon la revendication 1, **caractérisé en ce qu'**une source de tension d'alimentation commune (0V/+12V) pour tous les dispositifs de consommation d'énergie (M1, M2, M3) est prévue.

3. Agencement selon la revendication 2, **caractérisé en ce que** la source de tension d'alimentation (0V/+12V) est une source de tension continue et **en ce que** les dispositifs de consommation d'énergie (M1, M2, M3) sont des dispositifs de consommation de courant continu, et **en ce que** les dispositifs sensibles (D11-14, D21-D24, D31-D34) sont formés par des diodes, au moins une borne de chaque dispositif de consommation d'énergie, dont le potentiel varie lors de l'application de tension d'alimentation, étant connectée aux entrées de commande des commutateurs de protection associés aux autres dispositifs de consommation d'énergie par l'intermédiaire d'une diode respective transmettant la variation de potentiel.

4. Agencement selon la revendication 1, **caractérisé en ce que** chaque commutateur de protection est formé par un relais électromagnétique qui a un contact de repos (k2) situé sur le chemin d'alimentation du dispositif de consommation d'énergie associé (ex. M2) et dont la bobine (S2) est connectée aux sorties des dispositifs sensibles (D11-14, D31-D34) associés aux autres dispositifs de consommation d'énergie et est excitée par le signal d'activation.

5. Agencement selon les revendications 3 et 4, **caractérisé en ce**
- **que** l'une des extrémités de la bobine de relais (ex. S2) de chaque commutateur de protection est connectée aux côtés sortie des diodes de tous les dispositifs sensibles (ex. D11-14, D31-D34) associés aux autres dispositifs de consommation d'énergie (ex. M1, M3), et
- **en ce que** l'autre extrémité de la bobine de relais (ex. S2) de chaque commutateur de protection est connectée au pôle (0V) de la source de tension d'alimentation dont le potentiel est différent du potentiel transmis par les diodes.

6. Agencement selon l'une des revendications précédentes, **caractérisé en ce que** les dispositifs de consommation d'énergie (M1, M2, M3) sont des moteurs électriques.

7. Agencement selon l'une des revendications précédentes, **caractérisé en ce que** les moteurs électriques (M1, M2, M3) sont des moteurs à sens de rotation réversible, et les commutateurs d'actionnement (B1, B2, B3) sont des commutateurs de sélection.

8. Agencement selon la revendication 6 ou 7, **caractérisé en ce que** les moteurs électriques (M1, M2, M3) sont les moyens d'entraînement d'un dispositif pour le réglage électrique de sièges, en particulier dans un véhicule.

9. Agencement selon la revendication 6 ou 7, **caractérisé en ce que** les moteurs électriques (M1, M2, M3) sont les moyens d'entraînement d'un dispositif pour le réglage électrique de colonne de direction dans un véhicule.
